# EUROPEAN PATENT APPLICATION

(11) **EP 2 720 152 A1**
(43) Date of publication of application: **16.04.2014**
(21) Application number: 11865462.3
(22) Date of filing: 20.10.2011
(51) Int. Cl.: G06F 17/30

(54) **METHOD AND SYSTEM FOR OBTAINING IDENTIFICATION INFORMATION OF DATA TERMINAL DEVICE**

(30) Priority: 08.07.2011 CN 201110191470
(71) Applicant: ZTE Corporation, Shenzhen, Guangdong 518057 (CN)
(72) Inventor: LUAN, Lan, Shenzhen Guangdong 518057 (CN)
(74) Representative: Modiano, Micaela Nadia
(86) International application number: PCT/CN2011/081028
(87) International publication number: WO 2012/155452

(57) **Abstract**

The present document provides a method and system for obtaining identification information of a data terminal device. The method includes: obtaining a corresponding relationship of a Multifunction Interface (MI) number and a port type of the data terminal device; obtaining a corresponding relationship of the MI number and a port name of the data terminal device in the system from a system file used for recording attribute information of a Universal Serial Bus (USB) device connected to the system; and combining the corresponding relationship of the MI number and the port type of the data terminal device and the corresponding relationship of the MI number and the port name of the data terminal device to obtain a corresponding relationship of the port types and the port names of the data terminal device.

## Description

### Technical Field

The present document relates to the computer application field, and in particular, to a method and system for obtaining identification information of a data terminal device.

### Background of the Related Art

With the rapid development of the terminal data products, such as the wireless data card, the mobile phone, etc., the ways for the data terminal products accessing the network become diversified, and the performance of the hardware device is promoted greatly, and all those make the requirement for operating the device uniformly and diversely by the user more and more urgent. The data terminal device management software at the PC side, as a bridge of the device and the user, becomes an important make-up to promote the user experience and improve the product usability characteristic.

And for the operation platform of the data terminal device management software at the PC side, besides the windows operating systems of Microsoft, the operating systems, such as, Mac OS, Linux, etc., win more and more concerns of people in the market by advantages such as dazzling visual effect, a large amount of the application software, etc. The technical scheme involved in this text is derived from the current requirement, that is, how to make the data terminal device management software at the PC side under the Linux system identify the data terminal device correctly, and manage, monitor and switch over a plurality of similar products inserted in the system. Because the processing mode of the Linux system is different from the processing mode of the Windows system, the management method of the data terminal device in the Windows system cannot be transplanted to the Linux system directly, and further, there are no port and device processing mechanism similar to those of the windows system in the Linus system, so the management and identification method of the data terminal device under the Linux system arise at the historic moment.

At present, the management software of the data terminal type device in the Linux system mainly utilizes the third party software (lsusb) running on the system to obtain the PID\VID information of the device, and then the corresponding relationship of the port names and the respective port type of the operation is determined by means of adopting the enumeration test mode. The method can be adapted to the case of looking for a single device, while in the situation that the port is abnormal, a plurality of devices are inserted, etc., the enumeration error rate of the device is very high and the management operation of the multiple devices can not be supported temporarily. In addition, for a port test, the port needs to be opened and a command needs to be sent to confirm the attribute of the port, and a series of operations cause bad real-time performance when the device operation is identified.

At present, the major trend of the application software is that the software acts consistently in various operating systems to facilitate the operation of the user, however, compared with the convenient management for multiple devices of windows, the above-mentioned mode is unable to meet the strong demand for improving the performance no matter with respect to the performance or to the real-time operation.

### Summary of the Invention

The present document provides a method and system for obtaining identification information of a data terminal device, and the technical problem required to be solved is how to obtain the identification information of the data terminal device in real time.

In order to solve the above-mention technical problem, the present document provides the following technical scheme:
a method for obtaining identification information of a data terminal device comprises:
   obtaining a corresponding relationship of a Multifunction Interface (MI) number and a port type of the data terminal device;
   obtaining a corresponding relationship of the MI number and a port name of the data terminal device in a system from a system file used for recording attribute information of Universal Serial Bus (USB) devices connected to the system; and
   combining the corresponding relationship of the MI number and the port type of the data terminal device with the corresponding relationship of the MI number and the port name of the data terminal device to obtain a corresponding relationship of the port type and the port name of the data terminal device.

The mode for obtaining a corresponding relationship of an MI number and a port type of the data terminal device comprises:
mode one: obtaining a product identification code of the data terminal device;
regarding the product identification code of the data terminal device as a key word, obtaining the corresponding relationship of the MI number and the port type of the data terminal device from the corresponding relationship of the MI number and the port type corresponding to each product identification code stored in advance; or
mode two: obtaining the product identification code and a vendor identification code of the data terminal device;
regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

The product identification code and the vendor identification code are obtained by means of:
reading files of which directories are "*-*" corresponding to the data terminal device from the system file, wherein, * is an integer; and
in the file of which the directory is "*-*", obtaining the product identification code of the data terminal device from a file of which the directory contains product identification code information, and obtaining the vendor identification code of the data terminal device from the file of which a directory contains vendor identification code information.

The step of obtaining the corresponding relationship of the MI number and the port name of the data terminal device in the system comprises:
obtaining files of which directories are "*-*:*.#" from the file of which the directory is "*-*" corresponding to the data terminal device in the system file, and regarding an item in a location of "#" in the directory "*-*:*.#" as an MI number of one port of the data terminal device; and
in the file of which the directory is "*-*:*.#", obtaining a file of which the directory is ttyUSB* or ttyACM*, regarding an item in a location of the "*" in the directory ttyUSB* or ttyACM* as a port name of the same port, thus obtaining the corresponding relationship of the MI number and port name;
wherein, the * and the # are integers.

The method further comprises:
getting a distributed bus number and a device address on the bus for the data terminal device, and regarding the bus number and the device address on the bus as an identification used for identifying the data terminal device when responding to external operation.

A system for obtaining identification information of a data terminal device comprises:
a first obtaining apparatus, configured to obtain a corresponding relationship of a Multifunction Interface (MI) number and a port type of the data terminal device;
a second obtaining apparatus, configured to obtain a corresponding relationship of the MI number and a port name of the data terminal device in an operation system from a system file used for recording attribute information of a Universal Serial Bus (USB) device connected to the operation system; and
a combining apparatus, configured to combine the corresponding relationship of the MI number and the port type of the data terminal device and the corresponding relationship of the MI number and the port name of the data terminal device to obtain a corresponding relationship of the port type and the port name of the data terminal device.

The first obtaining apparatus is configured to obtain the corresponding relationship of the MI number and the port type of the data terminal device by the following way: obtaining a product identification code of the data terminal device; and regarding the product identification code of the data terminal device as a key word, obtaining the corresponding relationship of the MI number and the port type of the data terminal device from the corresponding relationship of the MI number and the port type corresponding to each product identification code stored in advance; or obtaining the product identification code and a vendor identification code of the data terminal device; and regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

The first obtaining apparatus comprises:
a reading modules, configured to read files of which directories are "*-*" corresponding to the data terminal device from the system file, wherein, * is an integer; and
a first obtaining module, configured to, in the file of which the directory is "*-*", obtain the product identification code from a file of which a directory contains product identification code information, and obtain the vendor identification code of the data terminal device from a file of which a directory contains vendor identification code information.

The second obtaining apparatus comprises:
a second obtaining module, configured to obtain a file of which a directory is "*-*:*.#" from the file of which the directory is "*-*" corresponding to the data terminal device in the system file, and regard an item in a location of "#" in the directory "*-*:*.#" as an MI number of one port of the data terminal device; and
a third obtaining module, configured to, in the file of which the directory is "*-*:*.#", obtain a file of which the file name is ttyUSB* or ttyACM*, regard an item in a location of the "*" in the file ttyUSB* or ttyACM* as a port name of the same port, thus obtaining the corresponding relationship of the MI number and port name;
wherein, the * and the # are integers.

The system further comprises:
a distributing apparatus, configured to distribute a bus number and a device address on the bus for the data terminal device, and regard the bus number and the device address on the bus as an identification used for identifying the data terminal device when responding to external operation.
Compared with the related art, the present document utilized the characteristic of the system file format to obtain the corresponding relationship of the MI number and the port name in the current system, and in combination with the already obtained corresponding relationship of the MI number and the port type, the corresponding relationship of the port name and the port type is obtained, thus achieving the objective of obtaining the identification information; compared with the enumeration method in the related art, the time required to be cost is shorter, the accuracy is higher, and the requirement of real-time is met.

### Brief Description of Drawings

FIG. 1 is a flow chart of an embodiment of the method for obtaining identification information of a data terminal device provided by the present document;
FIG. 2 is a flow chart of an embodiment of the system for obtaining identification information of a data terminal device provided by the present document;
FIG. 3 is a structure diagram of a first obtaining apparatus 201 in the embodiment of the system shown in FIG. 2.

### Preferred Embodiments of the Invention

In order to make the objective, technical scheme and advantage of the present document much more clear and obvious, the present document is described in detail with reference to the accompanying drawings and combining with the embodiment hereinafter. It should be illustrated that, in the case of no conflict, the embodiments in the present application and features in these embodiments can be combined with each other.

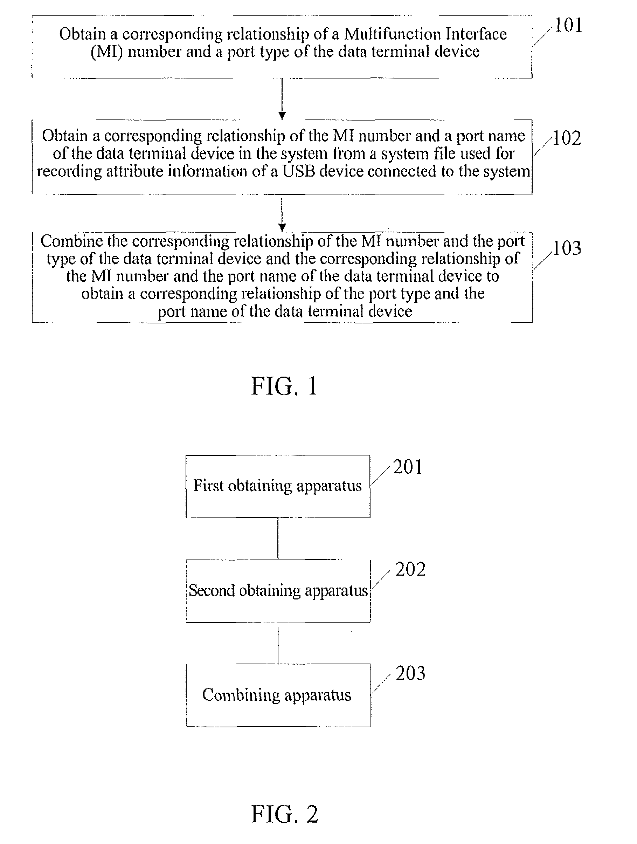

FIG. 1 is a flow chart of an embodiment of the method for obtaining identification information of a data terminal device in the Linux system provided by the present document. The embodiment of the method shown in FIG. 1 includes the following steps.

In step 101, a corresponding relationship of a Multifunction Interface (MI) number and a port type of the data terminal device is obtained;

Wherein, the corresponding relationship of the MI number and the port type can be obtained according to a product identification code of the data terminal device; the method for obtaining the product identification code can be obtained through a third party software, and a file, of which a directory is "*-*" corresponding to the data terminal device in the system file used for recording attribute information of a USB device connected to the system, also can be read, wherein, the * is an integer; in the file of which the directory is "*-*", the product identification code is obtained from the file of which the directory contains product identification code information.

After obtaining the product identification code, the corresponding relationship of the MI number and the port type corresponding to the product identification code can be obtained through manual inquiry, and it also can be obtained through automatic inquiry, which includes specifically: regarding the product identification code of the data terminal device as a key word, obtaining the corresponding relationship of the MI number and the port type of the data terminal device from the corresponding relationship of the MI number and the port type corresponding to each product identification code stored in advance.

It needs to be illustrated that, considering that the product identification codes of some manufacturers may be the same, in order to improve the inquiry accuracy, it can also be obtained by the following way, comprising: obtaining the product identification code and a vendor identification code of the data terminal device; and regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

Similarly, similar to the method for obtaining the product identification code, the method for obtaining the vendor identification code also can be obtained through a third party software, and a file of which a directory is "*-*" corresponding to the data terminal device in the system file can also be read, wherein, * is an integer; and the vendor identification code of the data terminal device is obtained from a file of which a directory contains vendor identification code information in the file of which the directory is "*-*".

In step 102, a corresponding relationship of the MI number and a port name of the data terminal device in a system is obtained from system files used for recording attribute information of a Universal Serial Bus (USB) device connected to the system;
specifically, a file of which a directory is "*-*:*.#" in the path information is obtained from the file of which the directory is "*-*" corresponding to the data terminal device in the system file, and an item in a location of "#" in the directory "*-*:*.#" is regarded as an MI number of one port of the data terminal device; and in the file of which the directory is "*-*:*.#", a file of which the directory is ttyUSB* or ttyACM* is obtained, and an item in a location of the "*" in the directory ttyUSB* or ttyACM* is regarded as a port name of the same port, thus obtaining the corresponding relationship of the MI number and port name;
wherein, the * and the # are integers.

In step 103, the corresponding relationship of the MI number and the port type of the data terminal device and the corresponding relationship of the MI number and the port name of the data terminal device are combined to obtain a corresponding relationship of the port type and the port name of the data terminal device.

It can be seem that the corresponding relationship of the MI number and the port name can be obtained by using the characteristic of the system file format in the present system, and then, the corresponding relationship of the port name and the port type can be obtained in combination with the already obtained corresponding relationship of the MI number and the port type, thus achieving the objective of obtaining the identification information; compared with the enumeration method in the related art, the time required to be cost is shorter, the accuracy is higher, and the requirement of real-time is met.

Wherein, in order to facilitate the system to uniquely identify the data terminal device, a bus number and a device address on the bus can be distributed for the data terminal device, and the bus number and the device address on the bus are regarded as an identification used for identifying the data terminal device when responding to external operation, and when receiving an external request for accessing the data terminal device, the identification is adopted to determine the data terminal device.

The embodiment described hereinafter is suitable for identifying the data terminal device port, such as, the data card of a composite port, the mobile phone, etc., in the Linux system and the switch management and control among multiple devices. Wherein, the Linux system can be red hat Linux, red flag Linux, ubuntu, Fedora Core, SUSE Linux, Gentoo, RED HATES or Debian, etc. The composite port of the data terminal device refers to that a drive maps a plurality of virtual ports for the data terminal device in the Linux system; if the data terminal device realizes a plurality of different functions, the drive will map a virtual port in the system; if the data terminal device can be used as a modem and also can be used as a storage device, the drive will map a plurality of virtual ports for it in the system.

The embodiment of the method provided by the present document is described in derail hereinafter:
a device information list (DeviceInfoList) and a device port information list (DeviceInterfaceInfoList) are stored in the Linux system in advance. Wherein, the above-mentioned two lists are made by using the product identification code (PID) as the key word.

Wherein, every item in the device information list should include a device name, system information, a PID and a vendor ID (VID); and every item in the device information list includes the corresponding relationship of the MI number and the port type of the data storage device of the PID number.

The information in the above-mentioned two lists is designed well at the beginning of the product design, therefore, for a data terminal device, the above-mentioned information is able to be determined. In other words, its device PID, VID, the number of ports, and function are already decided at the beginning of the design, therefore, the VID of each manufacturer is decided, the PID of every device is decided, and the corresponding relationship of the port MI number and the port function (port type) information can be determined.

The above-mentioned two lists can be stored in the system directory by means of xml, and is opened and analyzed and the corresponding information is obtained when the lists are used; and also can exist in the application program managed by the device in a form of a static table directly, and because the static table has obvious advantages in query efficiency, in the present document, the form of the static table is used to manage the device information;
the reason for using the PID as the key word is that: the VID information of the device is obtained by the vendor applying to a USB execution forum, and the VID information of all hardware devices of the same device manufacturer is the same; if the VID is adopted as the key word, then probably more than two items can be found in the list under one VID key word; the PIDs of the devices of different manufacturers may be the same, but for the same manufacturer, the PID of one device is unique, and different within the same device manufacturer, so the unique item can found by using the PID as the key word.

The method for obtaining the identification information of the data terminal device includes specifically:
in step A, it is to obtain a device list (CurrDevList) of the data terminal devices on the current system bus, wherein, the item in the CurrDevList is DevStruct, wherein, the DevStruct includes a unique ID identification CurrDevice.id of the device and device information, wherein, the device information includes the PID, the VID, the device system information and the device name.

Wherein, by obtaining the PID of the data terminal device, the device information is obtained from the pre-stored device information list according to the PID, including the following procedure specifically:
because the Linux system manages the device in the form of file, every device inserted into the USB bus is represented in the system in the form of a folder, wherein, the path information where the system file locates is /sys/bus/usb/devices, wherein, the system file is used to record the attribute information of the USB device connected to the system in the Linux system, so the folder list DirList therein can be obtained by opening the /sys/bus/usb/devices folder;
it is to perform screening on the above-mentioned folder list DirList, add the folder of which the folder form only includes, such as, the *-* (* is an integer) into the DevDirList; wherein, the folder form contained by the DirList includes 2-1, 2-1:1.0, etc., wherein, the directory which is similar to 2-1:1.0 is a subdirectory of the device represented by 2-1, therefore only the folder similar to 2-1 is added into the DevDirList when producing the DevDirList;
the path DevPath used for obtaining the PID and the VID is formed according to a folder name in the DevDirList and a path /sys/bus/usb/devices, for example, taking the folder form as 2-1, the DevPath is /sys/bus/usb/devices/2-1;
the detailed information of the device can be obtained by inquiring the DeviceInfoList according to the PID information.

Considering that the PIDs among different manufacturers may be the same, therefore, the VID information also needs to be obtained when obtaining the PID information, wherein, the VID information can be obtained by reading the file named as idVendor in the directory when opening the directory where the DevPath locates, wherein, it can also be judged whether the VID information is in the pre-stored device information list; if not, then it shows that the data terminal device is not a manufacturer device which needs to be managed, that is, the data terminal device is neglected.

Wherein, the unique ID identification CurrDevice.id of the data terminal device in the system is obtained by the following way:
after determining that there is a file of the device in the system under the path /sys/bus/usb/devices, a BusNumber (bus number) and its corresponding DevAddress on the bus (the device address on the bus) are distributed for the device, and the BusNumber and the DevAddress are combined to form the unique ID identification of the data terminal device in the system.

After the name and the system information of the device and the unique ID identification of the device are obtained by inquiring in the DeviceInfoList through the PID information, the above-mentioned information is added into the DevStruct. The above-mentioned operations are repeated to store the device information of all current devices in the system into the CurrDevList.

In step B, the device list is updated;
wherein, the possible situation of the change of the device list includes Remove_Idle_Dev (idle device (non-current operating device) removing), Remove_Selected_Dev (currently-used device removing) and Insert_Dev (device inverting). If the current state is the Remove_Selected_Dev, it can be reported directly, and the Client Management (CM) software is notified to perform the corresponding suggestion and operation. For the Remove_Idle_Dev and the Insert_Dev, the CurrDevList needs to be updated. Wherein, the CM software is used to obtain the detailed device port information according to the CurrDevice information selected by the user, that is, the corresponding relationship of the device port name and port type, thus finishing the work of obtaining the specific information of the device.

Specifically speaking, the change situation of the data terminal device on the current system is detected circularly. Wherein, there can be the following several steps specifically in the step B:
B1. the current device list CurrDevList is obtained;
B2. it is compared with the device list LastDevList obtained from the last circulation (which is empty for the first time);
B3. the change state of the device list is determined through comparing the size of the CurrDevList and that of the LastDevList.

If CurrDevList.size > LastDevList.size, which represents the state of the current device list is Insert_Devs; now it needs to be judged whether the device PID is a CD mode PID of the device; if yes, the device management module needs to issue the corresponding command (eject), to switch the device to the composite port mode and make the device enter the normal composite port mode; and update the corresponding device information in the CurrDevList as the device information of its corresponding composite port.

If CurrDevList.size = LastDevList.size, the state of the device list is unchanged, and the next polling is entered;

If CurrDevList.size <LastDevList.size, it needs to be judged whether the CurrDevice is set; if the user does not set the CurrDevice, then the state of the current device list is Remove_Idle_Dev; if the CurrDevice is set and the ID of the CurrDevList is not found in the CurrDevList, then the state of the current device list is Remove_Selected_Dev; if the user sets the CurrDevice but the ID of the CurrDevList is found in the CurrDevList, then the state of the current device list is still Remove_Idle_Dev.

B4. the LastDevList is updated, that is, the CurrDevList is assigned to the LastDevList.

Through the above-mentioned steps B1∼B4, the change situation of the device list can be obtained accurately. Because the detection period generally is about 500ms, the CurrDevList can record the data terminal device connected to the system in real time accurately.

In step C, the external data terminal device to be operated is obtained;
Because all ports of the data terminal device are exclusive, that is, a certain port of the device can only be operated by one subject at the same moment. When the operation is not selected, in order to increase the efficiency of the device operation, the opening operation is not performed on the device when obtaining the data terminal list on the system, so there is no need to obtain the detailed information of the port when polling the system device; while the corresponding port information of the device is obtained only after the user determines the information of the operated device, and the opening operation of the port is performed according to the corresponding function. For the device selected by the user, it is recorded as CurrDevice in the device management module;
in step D, the detailed port information of the appointed device is obtained.

Because most data terminal devices are of multi-port multiplexed and every service needs to operate the particular port, but because of the open source characteristic of the Linux system, the current specification related to Linux must be accorded with when every manufacturer produces the drive of the multi-port device; the port enumerated by the data terminal device seen in the system only has the port name at present, and there are two formats, the ttyUSB* or ttyACM*, according to different hardware platforms (* is an integer and represents the port address in the system). There is no detailed description information of every interface (port) similar to windows system in the Linux system.

Specifically speaking, the PID is regarded as the key word, the corresponding relationship of the MI number and the port type corresponding to the PID obtained from the prestored device port information list, and it is combined with the corresponding relationship of the MI number and the port name in the system, with the above-mentioned two corresponding relationships combined, the corresponding relationship of the port type and the port name is obtained.

Wherein, the specific way for obtaining the corresponding relationship of the MI information and the port type is as follows:
in the device port information list (DeviceInterfaceInfoList), the PID information of the CurrDevice is regarded as the key word to inquire the corresponding relationship of the MI number and the port type of the CurrDevice, and the information is inserted into the MiInterfaceTypeMap, wherein, the MiInterfaceTypeMap is a corresponding relationship list of the MI information taking the MI number as key word and the port type.

Wherein, the specific way for obtaining the corresponding relationship of the MI information and the port name is as follows:
in step D1, the folder directory (such as 2-1) and the path /sys/bus/usb/devices of the PID information of the above-mentioned data terminal device is inquired in combination with the DevDirList, they are combined to generate the folder path InterfacePath of the device mapped in the system; for example, taking the folder form as 2-1, the InterfacePath is /sys/bus/usb/devices/2-1;
in step D2, the folder where the path InterfacePath is located is opened, all subdirectory names are obtained and added into the SubDirList, wherein, the format of the subdirectory is as * - *: *. # (*.# are all the integers), such as 2-1:1.0;
in step D3, the path data item in the SubDirList are taken out, and the subdirectory is opened according to the path data item, the folder names such as ttyUSB* or ttyACM* (* is the integer) therein are obtained, and an item in the location of the "*" in the folder name is regarded as the port name of the interface enumerated by the drive in the system;
in step D4, an item in the location of the "#" in the subdirectory *-*:*. # (* and # are all integers) appointed by the path data item in the step D3 is regarded as the MI number of the same Interface in the step D3, for example, in the 2-1:1.0, 0 is the MI number;
in step D5, the corresponding relationship of the port name and the MI number of the same Interface is obtained according to the port name and the MI number obtained from step D3 and D4, and the corresponding relationship is recorded in the MiInterfaceNameMap which takes the MI number as the key word;
in step D6, the above-mentioned MiInterfaceTypeMap and the MiInterfaceNameMap are combined by regarding the port MI number as the key word, then the corresponding relationship of the port name and the port type can be obtained;
in step E, once the CurrDevice and the detailed port information of the device are determined, then the device can be operated according to the requirement. After the user put forwards a request for device switchover to the device module, the device module will put the device information request by the user into the CurrDevice; the device management involved in the present document does not include the opening and closing operation of the device, but only provides the device information of the alternative device and its detailed port information for the user performing the operation.

FIG. 2 is an embodiment of the system for obtaining identification information of a data terminal device provided by the present document. The embodiment of the system shown in FIG. 2 includes:
a first obtaining apparatus 201, configured to obtain a corresponding relationship of a Multifunction Interface (MI) number and a port type of the data terminal device;
a second obtaining apparatus 202, connected to the first obtaining apparatus 201 and configured to obtain a corresponding relationship of the MI number and a port name of the data terminal device in the Linux system from a system file used for recording attribute information of a Universal Serial Bus (USB) device connected to the operation system; and
a combining apparatus 203, connected to the second obtaining apparatus 202 and configured to combine the corresponding relationship of the MI number and the port type of the data terminal device with the corresponding relationship of the MI number and the port name of the data terminal device to obtain a corresponding relationship of the port type and the port name of the data terminal device.

Wherein, the first obtaining apparatus 201 is configured to obtain the corresponding relationship of the MI number and the port type of the data terminal device by the following mode: obtaining a product identification code of the data terminal device; and regarding the product identification code of the data terminal device as a key word, obtaining the corresponding relationship of the MI number and the port type of the data terminal device from the corresponding relationship of the MI number and the port type corresponding to each product identification code stored in advance; or obtaining the product identification code and a vendor identification code of the data terminal device; and regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

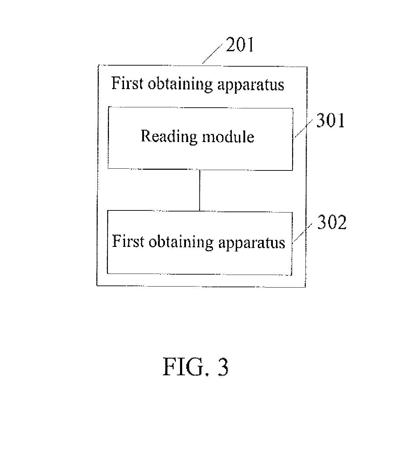

FIG. 3 is a structure diagram of a first obtaining apparatus 201 in the embodiment of the system shown in FIG. 2, and the first obtaining apparatus shown in FIG. 3 includes:
a reading module 301, configured to read files of which a directory is "*-*" corresponding to the data terminal device from the system file, wherein, * is an integer; and
a first obtaining module 302, configured to, in the file of which the directory is "*-*", obtain the product identification code from a file of which a directory contains product identification code information, and obtain the vendor identification code of the data terminal device from another file of which a directory contains vendor identification code information.

Wherein, the second obtaining apparatus includes:
a second obtaining module, configured to obtain a file of which a directory is "*-*:*.#" in the path information from the file of which the directory is "*-*" corresponding to the data terminal device in the system file, and regard an item in a location of "#" in the directory "*-*:*.#" as an MI number of one port of the data terminal device; and
a third obtaining module, configured to, in the file of which the directory is "*-*:*.#", obtain a file of which the directory is ttyUSB* or ttyACM*, regard an item in a location of the "*" in the directory ttyUSB* or ttyACM* as a port name of the same port, thus obtaining the corresponding relationship of the MI number and port name;
wherein, the * and the # are integers.

Alternatively, the system further includes:
a distributing apparatus, configured to distribute a bus number and a device address on the bus for the data terminal device, and regard the bus number and the device address on the bus as an identification used for identifying the data terminal device when responding to external operation.

The embodiment of the system provided in the present document, compared with the related art, utilizes the characteristic of the system file format to obtain the corresponding relationship of the MI number and the port name in the current system, and in combination with the already obtained corresponding relationship of the MI number and the port type, the corresponding relationship of the port name and the port type is obtained, thus achieving the objective of obtaining the identification information; compared with the enumeration method in the related art, the time required to be cost is shorter, the accuracy is higher, and the requirement of real-time is met.

It can be understood by those skilled in the art that all or part of steps in the above-mentioned embodiment can be fulfilled by the computer program flow, and the computer program flow can be stored in a computer readable storage medium, and the computer program flow is executed on the corresponding hardware platform (such as a system, a device, an apparatus, a component, etc.), and includes one or a combination of the steps of the embodiment of the method when executing.

Alternatively, all or part of the steps in the above-mentioned embodiments also can be implemented by the integrated circuits. Those steps can be made into integrated circuit modules one after another respectively, or multiple modules or steps therein are made into a single integrated circuit module for implementation. Thus, the present document is not limit to any specific combination of the hardware and software.

Each device / function module / function unit in the above-mentioned embodiment can be implemented by the universal calculating apparatus, and they can be integrated in a single calculating apparatus, or distributed in the network composed of a plurality of calculating apparatus.

Each device / function module / function unit in the above-mentioned embodiment can be stored in a computer readable storage medium when it is implemented in the form of the software function module, and is sold or used as an individual product. The above-mentioned computer readable storage medium can be a read only memory, a magnetic disk or an optical disk, etc.

The above description is only for the specific embodiment of the present document and is not intended to limit the protection scope of the present document. Those modifications and replacements which can be conceived easily by those skilled familiar with the art in the technical scope disclosed by the present document should be embodied in the protection scope of the present document. Therefore, the protection scope of the present document should be based on the protection scope described by the claims.

### Industrial Applicability

Compared with the related art, the present document utilizes the characteristic of the system file format to obtain the corresponding relationship of the MI number and the port name in the current system, and in combination with the already obtained corresponding relationship of the MI number and the port type, the corresponding relationship of the port name and the port type is obtained, thus achieving the objective of obtaining the identification information; compared with the enumeration method in the related art, the time required to be cost is shorter, the accuracy is higher, and the requirement of real-time is met.

## Claims

1. A method for obtaining identification information of a data terminal device, comprising:
obtaining a corresponding relationship of a Multifunction Interface (MI) number and a port type of the data terminal device;
obtaining a corresponding relationship of the MI number and a port name of the data terminal device in a system from a system file used for recording attribute information of Universal Serial Bus (USB) devices connected to the system; and
combining the corresponding relationship of the MI number and the port type of the data terminal device with the corresponding relationship of the MI number and the port name of the data terminal device to obtain a corresponding relationship of the port type and the port name of the data terminal device.

2. The method according to claim 1, wherein, a mode for obtaining the corresponding relationship of the MI number and the port type of the data terminal device comprises:
mode one: obtaining a product identification code of the data terminal device;
regarding the product identification code of the data terminal device as a key word, obtaining the corresponding relationship of the MI number and the port type of the data terminal device from the corresponding relationship of the MI number and the port type corresponding to each product identification code stored in advance; or
mode two: obtaining the product identification code and a vendor identification code of the data terminal device;
regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

3. The method according to claim 2, wherein, the product identification code and the vendor identification code are obtained by means of:
reading files of which directories are "*-*" corresponding to the data terminal device from the system file, wherein, * is an integer; and
in the file of which the directory is "*-*", obtaining the product identification code of the data terminal device from a file of which the directory contains product identification code information, and obtaining the vendor identification code of the data terminal device from the file of which a directory contains vendor identification code information.

4. The method according to any one of claims 1 to 3, wherein, the step of obtaining the corresponding relationship of the MI number and the port name of the data terminal device in the system comprises:
obtaining files of which directories are "*-*:*.#" from the file of which the directory is "*-*" corresponding to the data terminal device in the system file, and regarding an item in a location of "#" in the directory "*-*:*.#" as an MI number of one port of the data terminal device; and
in the file of which the directory is "*-*:*.#", obtaining a file of which the directory is ttyUSB* or ttyACM*, regarding an item in a location of the "*" in the directory ttyUSB* or ttyACM* as a port name of the same port, thus obtaining the corresponding relationship of the MI number and port name;
wherein, the * and the # are integers.

5. The method according to claim 1, further comprising:
getting a distributed bus number and a device address on the bus for the data terminal device, and regarding the bus number and the device address on the bus as an identification used for identifying the data terminal device when responding to external operation.

6. A system for obtaining identification information of a data terminal device, comprising:
a first obtaining apparatus, configured to obtain a corresponding relationship of a Multifunction Interface (MI) number and a port type of the data terminal device;
a second obtaining apparatus, configured to obtain a corresponding relationship of the MI number and a port name of the data terminal device in an operation system from a system file used for recording attribute information of a Universal Serial Bus (USB) device connected to the operation system; and
a combining apparatus, configured to combine the corresponding relationship of the MI number and the port type of the data terminal device and the corresponding relationship of the MI number and the port name of the data terminal device to obtain a corresponding relationship of the port type and the port name of the data terminal device.

7. The system according to claim 6, wherein,
the first obtaining apparatus is configured to obtain the corresponding relationship of the MI number and the port type of the data terminal device by following modes:
obtaining a product identification code of the data terminal device; regarding the product identification code of the data terminal device as a key word, obtaining the corresponding relationship of the MI number and the port type of the data terminal device from the corresponding relationship of the MI number and the port type corresponding to each product identification code stored in advance; or
obtaining the product identification code and a vendor identification code of the data terminal device; and regarding the product identification code and the vendor identification code of the data terminal device as the key word, obtaining the corresponding relationship of the MI number and the port type of the data terminal device from the corresponding relationship of the MI number and the port type corresponding to a combination of each product identification code and vendor identification code stored in advance.

8. The system according to claim 7, wherein, the first obtaining apparatus comprises:
a reading module, configured to read files of which directories are "*-*" corresponding to the data terminal device from the system file, wherein, * is an integer; and
a first obtaining module, configured to, in the file of which the directory is "*-*", obtain the product identification code from a file of which a directory contains product identification code information, and obtain the vendor identification code of the data terminal device from a file of which a directory contains vendor identification code information.

9. The system according to any one of claims 6 to 8, wherein, the second obtaining apparatus comprises:
a second obtaining module, configured to obtain a file of which a directory is "*-*:*.#" from the file of which the file name is "*-*" corresponding to the data terminal device in the system file, and regard an item in a location of "#" in the directory "*-*:*.#" as an MI number of one port of the data terminal device; and
a third obtaining module, configured to, in the file of which the directory is "*-*:*.#", obtain a file of which the directory is ttyUSB* or ttyACM*, regard an item in a location of the "*" in the file ttyUSB* or ttyACM* as a port name of a same port, thus obtaining the corresponding relationship of the MI number and port name;
wherein, the * and the # are integers.

10. The system according to claim 9, further comprising:
a distributing apparatus, configured to distribute a bus number and a device address on the bus for the data terminal device, and regard the bus number and the device address on the bus as an identification used for identifying the data terminal device when responding to external operation.
